# EUROPEAN PATENT SPECIFICATION

(11) **EP 2 157 122 B1**
(45) Date of publication and mention of the grant of the patent: **22.06.2011**
(21) Application number: 08462006.1
(22) Date of filing: 19.08.2008
(51) Int. Cl.: C08J 7/04, B32B 27/30, C08L 27/04, C08L 33/12

(54) **Composition constituting the surface layer of a sheet type plastic body for covering purposes and process for manufacturing the sheet type plastic bodies containing it**
Die Oberflächenschicht eines blattartigen Kunststoffkörpers bildende Zusammensetzung zu Abdeckungszwecken und Verfahren zur Herstellung des blattartigen Kunststoffkörpers damit
Composition formant la couche superficielle d'un corps en plastique de type feuille destiné au recouvrement et procédé de fabrication des corps en plastique de type feuille le contenant

(43) Date of publication of application: 24.02.2010
(73) Proprietor: Graboplast Padlógyártó ZRT., 9023 Györ (HU)
(72) Inventor: Stelczer, Tibor, 9026 Györ (HU); Nagy, Tamás, 9023 Györ (HU); Mészáros, Zoltán, 9028 Györ (HU); Zsegoráné Holczinger, Gyöngyi, 9012 Györ (HU); Takács, István, 9021 Györ (HU); Füzy, Péter, 9081 Györújbarát (HU); Erdö, András, 9023 Györ (HU); Szentmártoni, Lajos, 9027 Györ (HU); Farkasné Márton, Andrea, 9142 Rábapatona (HU); Herczig, Péter, 9028 Györ (HU)
(74) Representative: Varnai, Aniko

(56) References cited:
- FR-A- 2 842 530
- US-A- 4 595 617
- US-A- 5 230 945
- DATABASE WPI Week 199333 Thomson Scientific, London, GB; AN 1993-261847 XP002506576 & JP 05 179169 A (MITSUBISHI HEAVY IND CO LTD) 20 July 1993 (1993-07-20)

## Description

The invention relates to a multilayer sheet used for covering purposes and to a process for manufacturing the multilayer sheet it.

It is the fundamental problem in manufacturing sheet type plastic bodies, e. g. plastic covering panels that a product should be manufactured uniting two adversary requirements, the good hardness of surface and the adequate flexibility in one product.

The high value in use can be ensured in such a way that the requirements of high hardness of surface, wear resistance and high resistance to slipping to the surface layer are harmonized with the requirement of flexibility constituting one of the main advantages of plastic coverings.

The flexibility provides advantages in the technologies of application of plastic sheets used for covering among others the ease of handling, as well as the industrial realization of coverings when the sheet type plastic body is packaged in rolls as usually.

There is a multitude of known processes for manufacturing plastic sheet type plastic bodies.

Sheet type plastic bodies, mainly those for covering are built up of compact or cellular plastic films and optionally of reinforcing materials.

The plastic films are usually made of polyolefine, polyvinyl chloride and its copolymers or of varieties of these materials modified with different polymers using various shaping operations such as calendering, flat die extrusion extruded tube g blow moulding etc.

The individual film layers can be applied independently as single layer or the final construction of the covering is built up from the different layers by lamination, multiplication and by different gluing processes.

It is widely known and used in the manufacturing of polyvinyl chloride based products a spread coating, wherein the film layers built one onto another are formed by heating of plastisols.

Processes for manufacturing covering materials are described in the article "Flooring Materials" (Encyclopaedia of Polymer Science Engineering, Volume 7 (Wiley-Interscience 1987)).

A part of products manufactured in this way are rigid, inflexible and having high hardness of surface.

They are manufactured from granulated plastic materials or powders by moulding or extrusion or calendering of hard plates and cutting panel type bodies to required dimensions thereafter.

The hardness of surface is accompanied with rigidity, so they appear as plates or boards of different shapes. The surface is highly hard, wear-resistant.

The coverings are made on the site of usage, which requires a great quantity of manual work of skilled personal due to the joints.

Another group of known products is that of flexible sheet materials.

They usually consist of several layers they can contain both compact and foamy layers.

The products of this type are significantly softer, they can be rolled up and easily laid also by efficient industrial methods onto the surfaces to be covered.

The hardness of surface of such products is usually low, they are soft, more easily damaged and their wear resistance is also lower then that of the above described rigid products of hard surface.

The patent description of No. EP 0826830 describes a process for manufacturing by pasting a soft easily rolled up covering material containing also glass fiber reinforcing material.

The product has the disadvantage that the wear-resistance of its surface layer is low.

A multitude of different methods are used to improve the surface properties of products of such type.

According to the most frequently used method the surface is protected with UV cured cross-linked PUR (polyurethane) based polymers with optionally embedded hard grains.

The properties are improved, the flexibility remains unchanged, the dirt repellency, also slightly the wear resistance are improved, but the effect is only temporary and does not remain for the whole lifetime of the product, so the wearing resistance properties are not near to those of the rigid products of hard surface. The patent description of No US2004091691 describes a similar process, highlighting that the surface treatment provides excellent stain resistance.

The published patent application of No W09421721 describes a process for producing a protecting layer from a surface layer based on acrylic ester and urethane and cross-linked with UV light.

It is a usual method mainly for polyvinyl chloride based products to make inhomogeneous surface by embedding hard grains (e. g. corundum or SiC) into the upper plastisol layer, where the grains protruding from the surface make the effect as the product would have high surface hardness, but that is true for separate points of the surface only because the surface is basically inhomogeneous. The flexibility remains in this way but the hard grains can produce only temporary effect due to the limited embedding, as they fall out of the surface during usage and so the effect is lost.

The patent description of No EP0803603 describes application of ground thermoplastic plastic material scattered into the plastisol of surface in order to improve the surface properties. According to the patent description of No GB2362663 the surface protection is established by embedding a fiber type material into the applied liquid layer consequently into not a solid one.

The patent description of No EP 1266066 describes application of a thermosetting powder consequently not thermoplastic one onto the surface of a polyvinyl chloride film resulting in significant improvement of the surface properties.

The patent description of No EP1264035 describes scattering of powder of thermosetting material consequently not thermoplastic one and additionally silicon carbide grains onto the surface of polyvinyl chloride plastisol film in order to improve the surface properties.

The patent description of No DE4222724 describes a method for producing a coating foil consisting of a mixture of thermoplastic powder free of polyvinyl chloride and polyurethane.

A usage of granulated inorganic materials scattered onto and only partially embedded in a wet liquid consequently not form stable surface is described in the patent description of No GB2359034 to improve the surface properties. According to the published patent description of No WO97/09358 the surface of a panel type body is protected in such a way that an ionomer film made by flat die extrusion is applied to the surface by lamination.

The known solutions for improving longevity and safety properties result in products of two types.

The solutions of the first type produce a very hard (Sh° D 50-65) homogeneous surface having excellent wear resistance, but it is rigid at the same time the resistance to bending is above 600 N/cm², so the product is not flexible at all.

Those of the second type produce an inhomogeneous surface by partial embedding hard inorganic grains into the surface layer on a flexible covering having resistance to bending from 80 to 250 N/cm².

This operation makes particular points constituting 10 to 15% of the surface resistant, the hardness is identical to that of corundum the rest part of the surface is made up by soft polyvinyl chloride film.

During the usage the hard particles are torn out from the soft carrying surface (Sh°D 35-45) constituting 85 to 90% of the surface and the product loses its basic characteristics that is the anti-slipping and the wear resistance properties i. e. the durability.

Consequently the known solutions describe either the manufacturing of products of high surface hardness, which are therefore rigid, or they relate to a short time improvement of surface properties by partial embedding different grains into the surface layer or by application of a protecting film e. g. of polyurethane.

There is no known solution enabling to unite the flexibility and high surface hardness

We had the aim to establish a product, which is able to fulfil the above mentioned contradictory requirements at the same time consequently to make a homogeneous surface of high hardness (Sh°D 50 - 67) together with keeping the flexibility (80 to 250 N/cm²).

The invention relates to a multilayer sheet applicable for covering, which forms a layer of high hardness of continuous but micro-heterogeneous structure and film shaped having steady effect during the whole lifetime of the product.

The surface layer having the above mentioned properties does not reduce significantly the flexibility of the product.

The sheet like body produced according to the invention is advantageously soft having required flexibility.

There is a great freedom to choose the components of the composition.

The invention relates also to a process for manufacturing the multilayer sheet.

The sheet consisting of more layers under the surface one. It is built up an optional support layer and more polymer film layers.

The basic (original) sheet type plastic body can be manufactured by almost all of the known film manufacturing methods, which can be chosen and applied correspondingly to the constituting polymer i. e. heat lamination, or gluing foils made by extruded blow moulding, calendering, or flat die extrusion or film manufacturing by spread coating.

The product manufactured in this way can be subsequently heat-treated or grained embossed.

The original sheet type plastic body is manufactured advantageously immediately before application of the surface layer, but it may be manufactured also much earlier.

In the process according to the invention certain layers of the original sheet type plastic body consisting of one or more layers and including optionally reinforcing material should be brought into shape keeping it means solid status by forming operations and heat treatment before the application of the surface layer but it is not necessary to reach the final strength of the individual layers, including the surface film layer.

The composition of the surface layer advantageously a powder shape form grained plastic mixture, has to be stratified to this surface and a continuous but micro-heterogeneous surface film layer having the final properties has to be formed using heat and optionally pressure at the same time.

The base consists of one or several layers of sheet type support advantageously including glass fiber reinforcement and one or several compact or foamy plastic film layers.

The resistance to bending of such material characterized by the resistance at the bending of 45°, which is of 80 to 250 N/cm².

The film layers are built up from thermoplastic polymers e. g. ethylene-vinyl acetate, polyvinylidene chloride, polyacrylate, containing the usual additives, polyvinyl chloride vinyl acetate copolymer or softened polyvinyl chloride polymer and can contain other thermoplastic polymers in addition to the usual additives.

The upper film layer of the basic sheet type plastic body is in solid that is shape keeping state before applying the composition constituting the surface layer according to the invention and it has already at least 30% of its final mechanical characteristics.

The composition according to the invention being advantageously a powder form thermoplastic composition is layered onto this surface.

The composition according to the invention consists of at least two plastic fractions of significantly different particle size distributions and one of them has lower T_{g} (glass transition temperature) and softening interval, the other fraction has higher such temperatures than the polymer underlying the surface layer to be made.

The inventive composition consisting of a mixture of polyvinyl chloride, polymers with additives and optionally filler materials constituting a surface layer applied onto a sheet type plastic base body applicable for covering built up of several layers a support and optional more polymer based film layers.

The subject of the invention is a multilayer sheet used for covering purposes is consisting of an optional support layer and thermoplastic polymer based film layers - which constitute a lower layer, an upper layer and a surface layer.

The characteristic feature of the invention is the composition of the surface layer which contains the following powdered components:
a) one or more polymers, chosen from a vinylidene chloride copolymer or an ethylene vinylacetate copolymer, having glass transition temperature determining by DTMA method (Tg) lower by 15 to 42 °C than T_{g} (by DTMA method) of the upper layer of the multilayer sheet,
b) one or more polymers, chosen from a polyvinyl chloride based mixture or a polyvinyl chloride vinylacetate copolymer based mixture, having T_{g} (by DTMA method) higher by 25 to 45 °C than T_{g} of the upper layer of the multilayer sheet,
c) one or more polymers, chosen from methyl-methacrylate copolymers, having T_{g} (by DTMA method) higher by at least 70 °C than T_{g} (by DTMA method) of the upper layer of the multilayer sheet
   and it contains optionally
d) an inorganic filler material,
and the particle size of the components are the following: a) from 1,0 to 20 µm, b) from 40 to 250 µm, c) from 40 to 200 µm, d) 0.5 to 40 µm.

The other subject is the invention is a process for manufacturing the above written multilayer sheet.

The process is characterized by the following features.

Onto a heat-treated, form stable sheet - which is consisting of an optional support layer and thermoplastic polymer based film layers - the composition of the surface layer, as defined above, is layered in one or more stages, and it is heat treated in at least three stages, optionally under simultaneously applied pressure.

In the composition of the invention the share of the component a) is 10 to 40 mass parts that of the component b) is 60 to 90 mass parts and that of the component c is 0.1 to 10 mass parts in the composition.

Another advantageous embodiment of the composition contains 10 to 40 mass parts of the component a) 60 to 90 mass parts of the component b) 0.1 to 2 mass parts of the component c) and 5 to 10 mass parts of the component d).

In the composition according to the invention the component a) is advantageously powder formed having particle size from 1 to 20 µm, the component b) is advantageously powder form having particle size from 40 to 250 µm, the component c) is advantageously powder formed having particle size from 40 to 200 µm, the optionally added component d) is advantageously powder formed having particle size from 0.5 to 40 µm.

According to the inventive process the composition is applied advantageously in a layer of thickness of 60 to 700 µm onto the sheet type plastic body constituting the base. According to the process a temperature of 60 to 120°C is used in the first step, a temperature of 120 to 180°C and a temperature of 180 to 220°C are used in the second and third steps of the heat treatment respectively

It is advantageous to apply additionally a pressure of 50 to 550 kPa simultaneously with the heat treatment in the second and third stages of heat treatment.

The composition applied as surface layer is advantageously made by mechanical mixing from the base components.

The above mentioned powder mixture is layered by a known process by forming a layer between a rotating backing cylinder and a steel beam, by scattering or with an applying machine with sieve in one or more stages onto the surface of the sheet type plastic base body.

The particles of the thermoplastic polymer powder mixture constituting the composition do not penetrate into the upper layer of the base under the surface layer during the layer formation the polymer mixture fills only its micro-pores. The components of the composition constituting the surface layer fill continuously out the interstice among the particles in melted state under the pressure in the different temperature stages they do not penetrate one another and constitute a micro-heterogeneous polymer surface film of even thickness after cooling. The multilayer sheet and process according to the invention have the advantages that the product manufactured in this way has advantageously higher surface hardness than that of the sheet type base plastic body without the surface layer the resistance to bending does not diminish and these properties of the product remain to its whole lifetime.

The resistance to bending of the product manufactured by the process according to the invention surpasses advantageously at most by 5% the resistance to bending of the sheet type base plastic body without surface layer.

The surface hardness of the product manufactured by the process according to the invention surpasses advantageously at least by 40% the surface hardness of the sheet type base plastic body without surface layer.

The composition and the process according to the invention are demonstrated by the following examples with non-limiting character.

### Example 1.

Process for manufacturing object floor covering with glass fiber tissue reinforcement built up of compact polyvinyl chloride layers and provided with transparent surface course.

Glass fiber tissue of mass of 35 to 40 g/m² is used as carrier support.

### 1. The compositions of the polymer layers applied on the carrier support:

### 1.1. The lower layer

| | |
|---|---|
| S-polyvinyl chloride (K=61) (S= suspension) | 50 mass parts |
| E-polyvinyl chloride (K=67) (E=emulsion) | 50 mass parts |
| Chalk (of particle size from 1 to 5 µm) | 50 mass parts |
| Plasticizer of type phthalate ester (di-isononyl-phthalate=DINP) | 45 mass parts |
| Epoxidized soya-bean oil | 2 mass parts |
| Complex ester additive (fatty acid ester of polybasic alcohols) | 2 mass parts |
| Pigment paste | 3 mass parts |
| Polyvinyl chloride heat stabilizer (metal soap) | 2 mass parts |

### 1.2. The upper layer (T_{g}=15°C defined by method DTMA)

| | |
|---|---|
| S-polyvinyl chloride (K=61) | 25 mass parts |
| E-polyvinyl chloride (K=67) | 75 mass parts |
| Plasticizer of type phthalate ester (di-isononyl-phthalate=DINP) | 40 mass parts |
| Epoxidized soya-bean oil | 2 mass parts |
| Polyvinyl chloride heat stabilizer (metal soap) | 2 mass parts |

### 1.3. The surface layer

| | |
|---|---|
| Vinylidene chloride copolymer | |
| (T_{g}=-15°C defined by DTMA method) | |
| (of particle size from 1 to 5 µm/average grain size of 2.8 µm) | 10 mass parts |
| Polyvinyl chloride powder mixture (Tg = 48°C) | |
| (of particle size from 40 to 250 µm/ average particle size of 125 µm) | 89.9 mass parts |
| It consists of: | |
| Polyvinyl chloride (K=64, grain size from 40 to 250 µm/ average grain size of 135 µm) | 85 mass parts |
| Plasticizer of type phthalate ester (di-isononyl-phthalate=DINP) | 20 mass parts |
| Epoxidized soya-bean oil | 2 mass parts |
| Polyvinyl chloride heat stabilizer (metal soap) | 2 mass parts |
| Methyl methacrylate copolymer (T_{g} = 105°C) ( particle size from 40 to 250 µm/ average particle size of 140 µm) | 0.1 mass parts |

### 2. The technological parameters of the production of compositions constituting the layers.

The mixtures 1.1 and 1.2 are prepared according to the usual paste making process. The polyvinyl chloride powder mixture of 1.3 is prepared in a usual powder mixer apparatus.

The parameters are as follows:

| | | |
|---|---|---|
| Speed mixer: | Rotational speed: | 750 ± 20 min⁻¹ |
| | Material temperature: | |
| | At the beginning of cycle: | 20 °C +10/-5 |
| | At the end of cycle: | 110 °C +5/-0 |
| | Duration of cycle: | 10 min |
| Slow mixer: | Rotational speed: | 50 ± 10 min⁻¹ |
| | Material temperature: | |
| | At the end of cycle: | 30 °C +5/-5 |
| | Duration of cycle: | 8 min |

The mixture according to 1.3 is prepared in a usual mixer, in a slow mixer at the rotational speed of: 20 ± 5 min⁻¹

| | |
|---|---|
| Material temperature: | |
| At the end of cycle: | 20 °C +5/-5 |
| Duration of cycle: | 15 min |

### 1. Formation of layers

The lower layer: 1500 g/m²

The lower layer is applied by a usual application process (using a rotating steel counter-roll and a fixed steel applicator blade).

| | |
|---|---|
| Heat treatment on an oil-heated drum | |
| at the surface temperature of: | 140 ± 2 °C |
| Contact time on the heated drum: | 40 sec |
| The upper layer: | 800 g/m² |

The upper layer is applied by a usual application process (using rotating steel counter-roll and fixed steel applicator blade).

| | |
|---|---|
| Heat treatment on an oil-heated drum | |
| at the surface temperature of: | 140 ± 2 °C |
| Contact time on the heated drum: | 40 sec |
| The product is printed by screen printing as required. | |
| The hardness of the upper layer: | 35 Sh°D |
| The resistance to bending of the upper layer: | 116 N/cm² |
| The surface layer: | |

The surface layer is applied onto the heat treated form stable layer by a spread coating process in three stages.

| | |
|---|---|
| Material applied in the first stage: | 300 g/m² |
| Emission range of the infrared radiant heater: | 1 to 5 µm |
| Temperature of the surface: | 120 ± 2 °C |
| Material applied in the second stage: | 200 g/m² |
| Emission range of the infrared radiant heater: | 1 to 5 µm |
| Pressure of the pressing embossing machine: | 100 kPa |
| Temperature of the surface: | 150 ± 2 °C |
| Material applied in the third stage: | 100 g/m² |
| Emission range of the infrared radiant heater: | 1 to 5 µm |
| Pressure of the embossing machine: | 350 kPa |
| Temperature of the heat treating oven: | 190 ± 5°C |
| Contact time: | 5 min |

The surface of the product can be patterned with embossing roll if required.

The technical parameters of the manufactured product are as follows:

| | |
|---|---|
| Resistance to bending: | 120.00 N/cm² |
| Surface hardness: | 64 Sh °D |
| Width: | 200 cm |
| Weight: | 2950 g/m² |
| Thickness: | 2,1 mm |
| Curling: | 2 mm/2 m |
| Wear resistance: | 250 mg (TABER 5000 cycles, S42) |
| Remaining impression residual indentation: | 0.1 mm |
| Comfort for feet: | 0.4 mm |

### Example 2

A floor covering built up of compact polyvinyl chloride layers on a support of glass fiber tissue reinforced non woven PES (polyester) fabric provided with transparent surface course for purposes of the transport application.

The following materials are used as support:

| | |
|---|---|
| Glass fiber tissue | 35-40 g/m² |
| PES (polyester) fabric | 80-100 g/m² |

### 1. The compositions of polymer layers applied on the carrier are as follows:

### 1.1. The lower layer

| | |
|---|---|
| S-polyvinyl chloride (K=61) | 60 mass parts |
| E-polyvinyl chloride (K=67) | 55 mass parts |
| Chalk (of particle size from 1 to 5 µm) | 60 mass parts |
| Plasticizer of phthalate ester type (di-isononyl-phthalate=DINP) | 55 mass parts |
| Epoxidized soya-bean oil | 2 mass parts |
| Complex ester additive | 2 mass parts |
| Pigment paste | 3 mass parts |
| Polyvinyl chloride heat stabilizer (metal soap) | 2 mass parts |

### 1.2. The upper layer (Tg=17°C)

| | |
|---|---|
| S-polyvinyl chloride (K=61) | 25 mass parts |
| E-polyvinyl chloride (K=67) | 75 mass parts |
| Plasticizer of phthalate ester type (di-isononyl-phthalate=DINP) | 40 mass parts |
| Epoxidized soya-bean oil | 2 mass parts |
| Polyvinyl chloride heat stabilizer (metal soap) | 2 mass parts |

### 1.3. The surface layer

| | |
|---|---|
| Vinylidene chloride copolymer (T_{g} = -15 °C) | |
| (of particle size from 1 to 20 µm /of average particle size of 8 µm) | 12 mass parts |
| Powder mixture of polyvinyl chloride vinylacetate copolymers | |
| (T_{g} = 43 °C) (of particle size from 40 to 250 µm /of average particle size of 130 µm) | 80 mass parts |
| The composition of this mixture is as follows: | |
| Polyvinyl chloride vinylacetate copolymer | |
| (K=60, of particle size from 40 to 250 µm / of average particle size of 135 µm) | 85 mass parts |
| Plasticizer of phthalate ester type (di-isononyl-phthalate=DINP) | 20 mass parts |
| Tri-methylol-propane-trimethacrylate (TMPTMA) | 10 mass parts |
| Epoxidized soya-bean oil | 3 mass parts |
| Polyvinyl chloride heat stabilizer (metal soap) | 3 mass parts |
| Methyl-methacrylate copolimer (T_{g} = 105 °C) | |
| (of particle size from 40 to 250 µm / of average particle size of 140 µm) | 8 mass parts |

### 2. The technological parameters of preparation of the compositions constituting the layers are as follows:

The mixtures 1.1 and 1.2 are prepared according to a usual paste making process. The powder mixture of copolymers according to 1.3 is prepared in a usual powder mixer.

The parameters are as follows:

| | | |
|---|---|---|
| speed mixer: | Rotational speed: | 750 ± 20 min⁻¹ |
| | Material temperature: | |
| | At the beginning of cycle: | 20 °C +10/-5 |
| | At the end of cycle: | 110 °C +5/-0 |
| | Duration of cycle: | 10 min |
| Slow mixer: | Rotational speed: | 50 ± 10 min⁻¹ |
| | Material temperature: | |
| | At the end of cycle: | 30 °C +5/-5 |
| | Duration of cycle: | 8 min |

The surface layer mixture according to 1.3 is prepared in a usual mixer.

| | | |
|---|---|---|
| Slow mixer: | Rotational speed: | 20 ± 5 min⁻¹ |
| | Material temperature: | |
| | At the end of cycle: | 20 °C +5/-5 |
| | Duration of cycle: | 15 min |

### 3. Formation of layers

| | |
|---|---|
| The lower layer: | 1200 g/m² |

The lower layer is applied by a usual application process (using a rotating counter-roll and a fixed steel applicator blade).

| | |
|---|---|
| Heat treatment on an oil-heated drum | |
| at the surface temperature of | 140 ± 2 °C |
| Contact time on the heated drum: | 35 sec |
| The upper layer: | 800 g/m² |

The upper layer is applied by a usual application process (using rotating steel counter-roll and fixed steel applicator blade).

Heat treatment on an oil-heated drum

| | |
|---|---|
| at the surface temperature of: | 140 ± 2 °C |
| Contact time on the heated drum: | 35 sec |
| The surface of the product can be patterned by screen print if required. | |
| The hardness of the upper layer: | 39 Sh°D |
| Resistance to bending of the upper layer: | 125 N/cm² |

The surface layer:

The surface layer is applied onto the heat-treated form-stable upper layer by scattering with rotating cylinder and alternating counter-brush in two stages.

| | |
|---|---|
| Material applied in the first stage: | 100 g/m² |
| Emission range of the infrared radiant heater: | 1 to 5 µm |
| Temperature of the surface: | 120 ± 2 °C |
| Material applied in the second stage: | 100 g/m² |
| Emission range of the infrared radiant heater: | 1 to 5 µm |
| Pressure of the pressing machine: | 100 kPa |
| Temperature of the surface: | 140 ± 2 °C |
| Pressure of the pressing machine: | 400 kPa |
| Temperature of the heat treating oven: | 205 ± 5 °C |
| Contact time: | 4,5 min |

The surface of the product can be patterned with embossing roll if required.

The technical parameters of the product manufactured in this way are as follows:

| | |
|---|---|
| Resistance to bending: | 130.00 N/cm² |
| Surface hardness: | 67 Sh °D |
| Width: | 140 cm |
| Weight: | 2350 g/m² |
| Thickness: | 1.98 mm |
| Curling: | 1 mm/l m |
| Wear resistance: | 150 mg (TABER 5000 cycles, S42) |
| Residual indentation: | 0.1 mm |
| Comfort for feet: | 0.4 mm |

### Example 3

A floor covering for objects consisting of compact polyvinyl chloride layers reinforced with glass fiber tissue and provided with colour surface course.

Glass fiber tissue of parameter of 35 to 40 g/m² is used as support.

### 1. The compositions of the polymer layers applied on the carrier are as follows:

### 1.1 The lower layer

| | |
|---|---|
| S-polyvinyl chloride (K=61) | 40 mass parts |
| E-polyvinyl chloride (K=67) | 50 mass parts |
| Chalk (of particle size from 1 to 5 µm) | 45 mass parts |
| Plasticizer of phthalate ester type | |
| (di-isononyl-phthalate=DINP) | 45 mass parts |
| Epoxidized soya-bean oil | 2 mass parts |
| Complex ester additive | 2 mass parts |
| Pigment paste | 3 mass parts |
| Polyvinyl chloride heat stabilizer (metal soap) | 2 mass parts |

### 1.2 The upper layer (T_{g}=10°C)

| | |
|---|---|
| S-polyvinyl chloride (K=61) | 50 mass parts |
| E-polyvinyl chloride (K=67) | 50 mass parts |
| Plasticizer of phthalate ester type (di-isononyl-phthalate=DINP) | 45 mass parts |
| Epoxidized soya-bean oil | 2 mass parts |
| Polyvinyl chloride heat stabilizer (metal soap) | 2 mass parts |
| Chalk (of particle size from 1 to 5 µm) | 10 mass parts |
| Pigment paste | 5 mass parts |

### 1.3 The surface layer

| | |
|---|---|
| Vinylidene chloride copolymer (T_{g} = -15 °C) | |
| (of particle size from 1 to 10 µm / of average particle size of 4 µm) | 30 mass parts |
| Polyvinyl chloride powder mixture (T_{g} = 41 °C) | |
| (of particle size from 40 to 250 µm /of average particle size of 110 µm) | 60 mass parts |
| The composition of this mixture is as follows: | |
| Polyvinyl chloride (K=64, of particle size from 40 to 250 µm / of average particle size of 135 µm) | 90 mass parts |
| Plasticizer of phthalate ester type (di-isononyl-phthalate=DINP) | 30 mass parts |
| Chalk (of particle size from 1 to 5 µm) | 10 mass parts |
| Epoxidized soya-bean oil | 2 mass parts |
| Polyvinyl chloride heat stabilizer (metal soap) | 2 mass parts |
| Pigment paste | 5 mass parts |
| | |
| Metyhl-methacrylate copolymer (T_{g} = 105 °C | |
| (of particle size from 40 to 250 µm / of average particle size of 100 µm) | 2 mass parts |
| Inorganic material, dolomite (of particle size from | 1 to 40 µm |
| /of average particle size of 10 µm) | 8 mass parts |

### 2. The technological parameters of preparation of the compositions constituting the layers are as follows:

The mixtures 1.1 and 1.2 are prepared according to a usual paste making process. The polyvinyl chloride powder mixture according to 1.3 is made in a usual powder mixer.

The parameters are as follows:

| | |
|---|---|
| speed mixer: Rotational speed: | 750 ± 20 min⁻¹ |
| Material temperature: | |
| At the beginning of cycle: | 20 +10/-5 °C |
| At the end of cycle: | 100 +5/-0 °C |
| Duration of cycle: | 10 min |
| Slow mixer: Rotational speed: | 50 ± 10 min⁻¹ |
| Material temperature: | |
| At the end of cycle: | 30 +5/-5 °C |
| Duration of cycle: | 8 min |

The surface layer mixture according to 1.3 is prepared in a usual mixer The parameters are as follows:

| | |
|---|---|
| Slow mixer: Rotational speed: | 20 ± 5 min⁻¹ |
| Material temperature: | |
| At the end of cycle: | 20 +5/-5 °C |
| Duration of cycle: | 15 min |

### 3. Formation of layers

| | |
|---|---|
| The lower layer: | 2000 g/m² |

The lower layer is applied by a usual application process using a rotating counter-roll and a fixed steel applicator blade.

| | |
|---|---|
| Heat treatment on an oil-heated drum | |
| at the surface temperature of: | 150 ± 2 °C |
| Contact time on the heated drum: | 50 sec |
| The upper layer: | 500 g/m² |

The upper layer is applied by a usual application process (using a rotating steel counter-roll and a fixed steel applicator blade).

Heat treatment on an oil-heated drum

| | |
|---|---|
| at the surface temperature of: | 150 ± 2 °C |
| Contact time on the heated drum: | 50 sec |
| The hardness of the upper layer: | 32 Sh°D |
| Resistance to bending of the upper layer: | 100 N/cm² |

### The surface layer:

The surface layer is applied onto the heat-treated form-stable upper layer with a sieve-type applicator.

| | |
|---|---|
| Material applied in the first stage: | 60 g/m² |
| Emission range of the infrared radiant heater: | 1 to 5 µm |
| Temperature of the surface: | 60 ± 2 °C |
| Pressure of the pressing machine: | 100 kPa |
| Temperature of the surface: | 140 ± 2 °C |
| Pressure of the pressing machine: | 500 kPa |
| Temperature of the heat treating oven: | 185 ± 5 °C |
| Contact time: | 6 min |

The surface of the product can be patterned with embossing roll if required. The technical parameters of the product manufactured in this way are as follows:

| | |
|---|---|
| Resistance to bending: | 100.00 N/cm² |
| Surface hardness: | 63 Sh °D |
| Width: | 200 cm |
| Weight | 2610 g/m² |
| Thickness: | 2.03 mm |
| Curling: | 3 mm/2 m |
| Wear resistance: | 350 mg (TABER 5000 cycles, S42) |
| Residual indentation: | 0.1 mm |
| Comfort to feet: | 0.3 mm |

### Example 4

A floor covering for objects consisting of compact and foamy polyvinyl chloride layers reinforced with glass fiber tissue and provided with transparent surface course.

Glass fiber tissue of parameter of 35 to 40 g/m² is used as carrier support.

### 1. The compositions of the polymer layers applied on the carrier support are as follows:

### 1.1 The lower layer

| | |
|---|---|
| S-polyvinyl chloride (K=61) | 40 mass parts |
| E-polyvinyl chloride (K=67) | 50 mass parts |
| Chalk (of particle size from 1 to 5 µm) | 45 mass parts |
| Plasticizer of phthalate ester type di-isononyl-phthalate=DINP) | 45 mass parts |
| Plasticizer of benzoate ester type | 15 mass parts |
| Epoxidized soya-bean oil | 2 mass parts |
| Complex ester additive | 2 mass parts |
| Pigment paste | 3 mass parts |
| Polyvinyl chloride heat stabilizer (metal soap) | 2 mass parts |
| Azo-dicarbon-amide foaming agent | 2,5 mass parts |
| Activator | 2,5 mass parts |

### 1.2 The upper layer (T_{g}=10 C⁰)

| | |
|---|---|
| S-polyvinyl chloride (K=61) | 50 mass parts |
| E-polyvinyl chloride (K=67) | 50 mass parts |
| Plasticizer of phthalate type (di-isononyl-phthalate=DINP) | 45 mass parts |
| Epoxidized soya-bean oil | 2 mass parts |
| Polyvinyl chloride heat stabilizer (metal soap) | 2 mass parts |

### 1.3 The surface layer:

| | |
|---|---|
| Vinylidene chloride copolymer (T_{g} = -15 C⁰) | |
| (of particle size from 1 to 5 µm /of average particle size of 2 µm) | 39,9 mass parts |
| | |
| Polyvinyl chloride vinylacetate copolymer powder mixture (T_{g} = 40 C⁰) (of particle size from 40 to 250 µm /of average particle size of 105 µm) | 60 mass parts |
| The composition of this mixture is as follows: | |
| Polyvinyl chloride vinylacetate copolymer | |
| (K=60, of particle size from 40 to 250 µm /of average particle size of 135 µm) | 80 mass parts |
| Plasticizer of phthalate ester type (di-isononyl-phthalate=DINP) | 30 mass parts |
| Plasticizer of benzoate ester type | 10 mass parts |
| Epoxidized soya-bean oil | 3 mass parts |
| Polyvinyl chloride heat stabilizer (metal soap) | 3 mass parts |
| | |
| Methyl-methacrylate copolimer (T_{g} = 105 °C) | |
| (of particle size from 40 to 200 µm / of average particle size of 80 µm) | 0.1 mass parts |

### 2. The technological parameters of preparation of the compositions constituting the layers are as follows:

The mixtures 1.1 and 1.2 are prepared according to a usual paste making process. The copolymer powder mixture according to 1.3 is made in a usual powder mixer. The parameters are as follows:

| | |
|---|---|
| speed mixer: Rotational speed: | 750 ± 20 min⁻¹ |
| Material temperature: | |
| At the beginning of cycle: | 20 +10/-5 °C |
| At the end of cycle: | 100 +5/-0 °C |
| Duration of cycle: | 10 min |
| | |
| Slow mixer: Rotational speed: | 50 ± 10 min⁻¹ |
| Material temperature: | |
| At the end of cycle: | 30 +5/-5 °C |
| Duration of cycle: | 8 min |

The surface layer mixture according to 1.3 is prepared in a usual mixer.

| | |
|---|---|
| Slow mixer: Rotational speed: | 20 ± 5 min⁻¹ |
| Material temperature: | |
| At the end of cycle: | 20 +5/-5 °C |
| Duration of cycle: | 15 min |

### 3. Formation of layers

| | |
|---|---|
| The lower layer: | 1000 g/m² |

The lower layer is applied by a usual application process (using a rotating counter-roll and a fixed steel application blade).

Heat treatment on an oil-heated drum

| | |
|---|---|
| at the surface temperature of: | 140 ± 2 °C |
| Contact time on the heated drum: | 40 sec |
| The upper layer: | 700 g/m² |

The upper layer is applied by a usual application process (using a rotating steel counter-roll and a fixed steel application blade).

| | |
|---|---|
| Heat treatment on an oil-heated drum | |
| at the surface temperature of | 140 ± 2 °C |
| Contact time on the heated drum: | 40 sec |
| The surface of the product can be patterned by deep printing if required. | |
| The hardness of the upper layer: | 30 Sh°D |
| Resistance to bending of the upper layer: | 88 N/cm² |

### The surface layer:

The surface layer is applied onto the heat treated form stable surface by scattering with a rotating roll and a rotating counter-brush.

| | |
|---|---|
| Material applied in one stage: | 110 g/m² |
| Emission range of the infrared radiant heater: | 1-5 µm |
| Temperature of the surface: | 70 ± 2 °C |
| Pressure of the pressing machine: | 50 kPa |
| Temperature of the surface: | 130 ± 2 °C |
| Pressure of the pressing machine: | 300 kPa |
| Temperature of the heat treating oven: | 195 ± 5 °C |
| Contact time: | 4 min |

The surface of the product can be patterned with embossing roll if required. The technical parameters of th product manufactured in this way are as follows:

| | |
|---|---|
| Resistance to bending: | 90.00 N/cm² |
| Surface hardness: | 57 Sh °D |
| Width: | 200 cm |
| Weight: | 1860 g/m² |
| Thickness: | 2.25 mm |
| Curling: | 5 mm/2 m |
| Wear resistance: | 550 mg (TABER 5000 cycles, S42) |
| Residual indentation: | 0.2 mm |
| Comfort to feet: | 0.9 mm |

### Example 5.

A covering material consisting of compact PVC/PVAc calendered film layers provided with colour surface course.

### 1. The compositions of the layers are as follows:

### 1.1 The lower layer

| | |
|---|---|
| PVC/PVAc copolymer | 80 mass parts |
| Chalk (of particle size from 5 to 15 µm) | 40 mass parts |
| Pigment paste | 1 mass part |
| Plasticizer of phthalate ester type (di-isononyl-phthalate=DINP) | 15 mass parts |

### 1.2 The upper layer (T_{g}=8 C⁰)

| | |
|---|---|
| PVC/PVAc copolymer | 90 mass parts |
| Chalk (of particle size from 1 to 5 µm) | 10 mass parts |
| Pigment paste | 2 m |
| Plasticizer of phthalate ester type (di-isononyl-phthalate=DINP) | 10 mass parts |

### 1.3 The surface layer

| | |
|---|---|
| Ethylene vinylacetate copolymer (T_{g} = -34 °C) | |
| (of particle size from 5 to 15 µm / of average particle size of 10 µm) | 20 mass parts |
| Polyvinyl chloride powder mixture (T_{g} = 44 °C) | |
| (of particle size from 40 to 250 µm /of average particle size of 120 µm) | 70 mass parts |
| The composition of this mixture is as follows: | |
| Polyvinyl chloride (K=64, of grain size from 40 to 250 µm /of average particle size of 135 µm) | 90 mass parts |
| Plasticizer of phthalate ester type (di-isononyl-phthalate=DINP) | 30 mass parts |
| Chalk (of particle size from 1 to 5 µm) | 10 mass parts |
| Epoxidized soya-bean oil | 2 mass parts |
| Polyvinyl chloride heat stabilizer (metal soap) | 2 mass parts |
| Pigment paste | 5 mass parts |
| Methyl-methacrylate copolimer (T_{g} = 105 C⁰, of particle size from 40 to 200 µm / of average particle size of 90 µm) | 10 mass parts |

### 2. The technological parameters of preparation of the compositions constituting the layers are as follows:

The mixtures 1.1 and 1.2 are prepared according to a usual paste making process. The polyvinyl chloride mixture according to 1.3 is made in a usual powder mixer. The parameters are as follows:

| | | |
|---|---|---|
| speed mixer: | Rotational speed: | 750 ± 20 min⁻¹ |
| | Material temperature: | |
| | At the beginning of cycle: | 20 + 10/-5 °C |
| | At the end of cycle: | 100 +5/-0 °C |
| | Duration of cycle: | 10 min |
| Slow mixer: | Rotational speed: | 50 ± 10 min⁻¹ |
| | Material temperature: | |
| | At the end of cycle: | 30 +5/-5 °C |
| | Duration of cycle: | 8 min |

The surface layer mixture according to 1.3 is prepared in a usual mixer. The parameters are as follows:

| | | |
|---|---|---|
| Slow mixer: | Rotational speed: | 20 ± 5 min⁻¹ |
| | Material temperature: | |
| | At the end of cycle: | 20 +5/-5 °C |
| | Duration of cycle: | 15 min |

### 3. Formation of layers

| | |
|---|---|
| The lower layer: | 1000 g/m² |

The lower layer is manufactured by a usual process (with a calender of five rolls).

| | |
|---|---|
| Heat treatment on the calender rolls at the temperature of surface of: | 170 ± 2 °C |
| Contact time: | 50 sec |
| The upper layer: | 1000 g/m² |

The upper layer is manufactured by a usual process (with a calender of five rolls.

| | |
|---|---|
| Heat treatment on the calender rolls at the temperature of surface of: | 170 ± 2 °C |
| Contact time: | 50 sec |
| The hardness of the upper layer: | 29 Sh°D |
| Resistance to bending of the upper layer: | 89 N/cm² |

### The surface layer:

The surface layer is applied onto the heat-treated form-stable upper layer by scattering with rotating roll and rotating counter-brush.

| | |
|---|---|
| Material applied in one stage: | 200 g/m² |
| Emission range of the infrared radiant heater: | 1 to 5 µm |
| Temperature of the surface: | 120 ± 2°C |
| Pressure of the embossing machine: | 150 kPa |
| Temperature of the surface: | 160 ± 2 °C |
| Pressure of the embossing machine: | 550 kPa |
| Temperature of the heat treating oven: | 205 ± 5°C |
| Contact time: | 6 min |

The surface of the product can be patterned with embossing roll if required. The technical parameters of the product manufactured in this way are as follows:

| | |
|---|---|
| Resistance to bending: | 0.00 N/cm² |
| Surface hardness: | 58 Sh °D |
| Width: | 200 cm |
| Weight: | 2250 g/m² |
| Thickness: | 1.91 mm |
| Curling: | 4 mm/2 m |
| Wear resistance: | 400 mg (TABER 5000 cycles, S42) |
| Residual indentation: | 0.1 mm |
| Comfort to feet: | 0.3 mm |

## Claims

1. A multilayer sheet used for covering purposes consisting of an optional support layer and thermoplastic polymer based film layers - which constitute a lower layer, an upper layer and a surface layer - **characterized in that** the composition of the surface layer contains the following powdered components:
a) one or more polymers, chosen from a vinylidene chloride copolymer or an ethylene vinylacetate copolymer, having glass transition temperature determining by DTMA method (Tg) lower by 15 to 42 °C than T_{g} (by DTMA method) of the upper layer of the multilayer sheet,
b) one or more polymers, chosen from a polyvinyl chloride based mixture or a polyvinyl chloride vinylacetate copolymer based mixture, having T_{g} (by DTMA method) higher by 25 to 45 °C than T_{g} of the upper layer of the multilayer sheet,
c) one or more polymers, chosen from methyl-methacrylate copolymers, having T_{g} (by DTMA method) higher by at least 70 °C than T_{g} (by DTMA method) of the upper layer of the multilayer sheet
and it contains optionally
d) an inorganic filler material,
and the particle size of the components are the following: a) from 1,0 to 20 µm, b) from 40 to 250 µm, c) from 40 to 200 µm, d) 0.5 to 40 µm.

2. The multilayer sheet of claim 1, wherein the composition of the surface layer contains 10 to 40 mass parts of the component a), 60 to 90 mass parts of the component b) and 0.1 to 10 mass parts of the component c).

3. The multilayer sheet of claim 1, wherein the composition of the surface layer contains 10 to 40 mass parts of the component a), 60 to 90 mass parts of the component b), 0.1 to 2 mass parts of the component c) and 5 to 10 mass parts of the component d).

4. A process for manufacturing a multilayer sheet according to claim 1, **characterized in that** onto a heat-treated, form stable sheet - which is consisting of an optional support layer and thermoplastic polymer based film layers - the composition of the surface layer, as defined in claim 1, is layered in one or more stages, and it is heat treated in at least three stages, optionally under simultaneously applied pressure.

5. The process of claim 4 wherein the thickness of the surface layer is from 60 to 700 µm.

6. The process of claim 4 wherein a temperature of 60 to 120 °C is applied in the first stage of the heat treatment, a temperature of 120 to 180 °C is applied in the second stage of the heat treatment and a temperature of 180 to 220 °C is applied in the third stage of the heat treatment.

7. The process of claim 4 wherein a pressure of 50 to 550 kPa is applied simultaneously with the heat treatment in the second and third stages of the heat treatment.

## Patentansprüche

1. Ein mehrschichtiges Flachmaterial zu Abdeckungszwecken, das gegebenenfalls aus einer Trägerschicht und aus auf thermoplastischen Polymer-Materialien basierten Schichten besteht, worin sie eine untere, eine mittlere und eine Oberflächenschicht bilden, **damit gekennzeichnet, dass** die Zusammensetzung der Oberflächenschicht die folgenden pulverisierten Komponente enthält:
a) ein oder mehrere aus den Vinylidenchloriden ausgewählte Polymere oder ein Ethylenvinylacetat Kopolymer, deren durch Methode DTMA bestimmte Übergangstemperatur zu glasiger Zustand (T_{g}) mit 15 bis 42°C niedriger als (durch Methode DTMA gemessene) T_{g} der oberen Schicht des mehrschichtigen Flachmaterials ist,
b) ein oder mehrere aus einer auf Polyvinylchlorid basierten Polymermischung oder aus einer auf Polyvinylchlorid Vinylacetat Kopolymer basierten Mischung ausgewählte Polymere, deren (durch Methode DTMA bestimmte) T_{g} mit 25 bis 45°C höher als T_{g} der oberen Schicht des des mehrschichtigen Flachmaterials ist,
c) ein oder mehrere aus den Methyl-Methacrylate Kopolymere ausgewählte Polymere deren (durch Methode DTMA bestimmte) T_{g} mit mindestens 70°C höher als (durch Methode DTMA bestimmte) T_{g} der oberen Schicht des mehrschichtigen Flachmaterials ist,
sie enthält gegebenenfalls auch
d) einen anorganischen Füllstoff,
wo die Abmessungen der Partikel der Komponenten sind wie folgt: a) von 1,0 bis 20 µm, b) von 40 bis 250 µm, c) von 40 bis 200 µm, d) von 0,5 bis 40 µm.

2. Das mehrschichtige Flachmaterial gemäß dem Anspruch 1, darin die Zusammensetzung der Oberflächenschicht 10 bis 40 Massenanteil der Komponente a), 60 bis 90 Massenanteil der Komponente b) und 0.1 bis 10 Massenanteil der Komponente c) enthält.

3. Das mehrschichtige Flachmaterial gemäß dem Anspruch 1, darin die Zusammensetzung der Oberflächenschicht 10 bis 40 Massenanteil der Komponente a), 60 bis 90 Massenanteil der Komponente b), 0,1 bis 2 Massenanteil der Komponente c) und 5 bis 10 Massenanteil der Komponente d) enthält.

4. Ein Verfahren zur Herstellung eines mehrschichtigen Flachmaterials gemäß dem Anspruch 1, **damit gekennzeichnet, dass** die die Oberflächenschicht bildende gemäß Anspruch 1 bestimmte Mischung in einem oder mehreren Phasen auf ein warm-behandeltes formfestes gegebenenfalls aus einem Trägerschicht und aus auf thermoplastischen Polymer-Materialien basierten Schichten bestehenden Flachmaterial aufgestrichen wird, dann das Flachmaterial wird in mindestens drei Phasen, gegebenenfalls unter gleichzeitig angewandten Druck warm-behandelt.

5. Das Verfahren gemäß dem Anspruch 4, wo die Oberflächenschicht eine Dicke von 60 bis 700 µm hat.

6. Das Verfahren gemäß dem Anspruch 4, darin eine Temperatur von 60 bis 120°C in der ersten Phase, eine Temperatur von 120 bis 180°C, in der zweiten Phase und eine Temperatur von 180 bis 220°C in der dritten Phase der Wärmebehandlung angewendet werden.

7. Das Verfahren gemäß dem Anspruch 4, darin ein Druck von 50 bis 550 kPa gleichzeitig mit der Wärmebehandlung in deren zweiten und dritten Phasen angewendet wird.

## Revendications

1. Une plaque consistante en plusieurs couches utilisée à revêtement du sol ou lambris qui se compose d'une couche optionnelle de support et plusieurs couches fines sur la base de polymères constituant une couche inférieure, une couche supérieure et une couche superficielle **caractérisée par que** la composition de la couche superficielle se compose en les composantes pulvérisés suivants:
a) un ou plusieurs polymères choisis des copolymères vinylidene ou copolymères éthylène vinylacétate ayants la température de transition à l'état vitreux déterminée par la méthode DTMA (T_{g}) inférieure par 15 à 42°C à T_{g} (mesurée par la méthode DTMA) de la couche supérieure de la plaque de plusieurs couches,
b) un ou plusieurs polymères choisis d'un mélange basé sur polyvinylchloride ou d'un mélange basé sur copolymères polyvinylchloride vinylacétate ayants T_{g} (mesurée par la méthode DTMA) supérieure par 25 à 45°C à T_{g} de la couche supérieure de la plaque de plusieurs couches,
c) un ou plusieurs polymères choisis des copolymères méthyle méthacrylates ayants T_{g} (mesurée par la méthode DTMA) supérieure par au moins 70°C à T_{g} de la couche supérieure de la plaque de plusieurs couches,
et elle contient en le cas échéant
d) un matière inorganique remplissant
et la taille des granules des composantes son comme suit: a) de 1,0 à 20 µm, b) de 40 à 250 µm, c) de 40 à 200 µm et d) de 0,5 à 40 µm.

2. La plaque consistante en plusieurs couches selon la revendication 1 où la composition de la couche superficielle contient de 10 à 40 fractions de masse de la composante a), de 60 à 90 fractions de masse de la composante b) et de 0,1 à 10 fractions de masse de la composante c).

3. La plaque consistante en plusieurs couches selon la revendication 1 où la composition de la couche superficielle contient de 10 à 40 fractions de masse de la composante a), de 60 à 90 fractions de masse de la composante b), de 0,1 à2 fractions de masse de la composante c) et de 5 à 10 fractions de masse de la composante d).

4. Un procédé à fabriquer la plaque de plusieurs couches selon la revendication 1, **caractérisé par que** la composition de la couche superficielle défini par la revendication 1 est étendu dans un ou plusieurs phases sur la plaque composée en une couche optionnelle de support et couches fines sur la base des polymères thermoplastiques traitée avec chaleur ayant forme stable, la plaque est traitée avec chaleur ensuite en au moins trois étapes, en appliquant simultanément une pression en cas échéant.

5. Le procédé selon la revendication 4 où l'épaisseur de la couche superficielle est de 60 à 700 µm.

6. Le procédé selon la revendication 4 où une température de 60 à 120°C est appliqué dans la première étape du traitement thermique, une température de 120 à 180°C est appliqué dans la deuxième étape du traitement thermique et une température de 180 à 220°C est appliqué dans la troisième étape du traitement thermique.

7. Le procédé selon la revendication 4 où une pression de 50 à 550 kPa est appliqué simultanément avec le traitement thermique dans les deuxième et troisième étapes du traitement thermique.
